Europäisches Patentamt

**(19)** European Patent Office

Office européen des brevets

**(11)** Publication number : **0 473 507 A2**

# EUROPEAN PATENT APPLICATION

**(21)** Application number : **91402319.7**

**(51)** Int. Cl.⁵ : **H04N 7/12, H04N 7/13**

**(22)** Date of filing : **27.08.91**

**(30)** Priority : **27.08.90 KR 1324790**

**(43)** Date of publication of application :
**04.03.92 Bulletin 92/10**

**(84)** Designated Contracting States :
**DE FR GB**

**(71)** Applicant : **GOLDSTAR CO. LTD.**
**20, Yoido-Dong Yongdungpo-Ku**
**Seoul (KR)**

**(72)** Inventor : **Choi, Hyeon Jong**
**2-3, Wonpyung 3-Dong, Kumi**
**Kyungsangbook-DO (KR)**

**(74)** Representative : **Fort, Jacques**
**CABINET PLASSERAUD 84, rue d'Amsterdam**
**F-75009 Paris (FR)**

**(54)** Apparatus for transmitting and receiving an image signal in use of a telephone line.

**(57)** An apparatus for transmitting and receiving an image signal in use of a telephone line, comprising an image signal processing section including a central processing unit for controlling the whole operation of the apparatus, an A/D converter for converting an image signal outputted from a camera into a digital signal and a memory for storing the digital signal from the A/D convertor and reading out the stored digital data under a control of the central processing unit, an image signal transmitting section for converting the digital data outputted from the image signal processing unit into a sinusoidal wave signal of a predetermined frequency corresponding to the digital data and transmitting the sinusoidal wave signal of the predeteimined frequency to a telephone line interface circuit, and an image signal receiving section for counting a frequency of a sinusoidal wave signal received through the telephone line interface circuit, converting the counted. value into an origianl image signal and displaying the image signal on a monitor. The present apparatus is capable of transmitting and receiving much information of image data at high speed.

EP 0 473 507 A2

FIG.2

## BACKGROUND OF THE INVENTION

The present invention relates in general to an apparatus for transmitting and receiving an image signal in use of a general telephone line, and more particularly to an apparatus for transmitting and receiving the image signal in use of the general telephone line, which is capable of transmitting and receiving much information of image data at high speed.

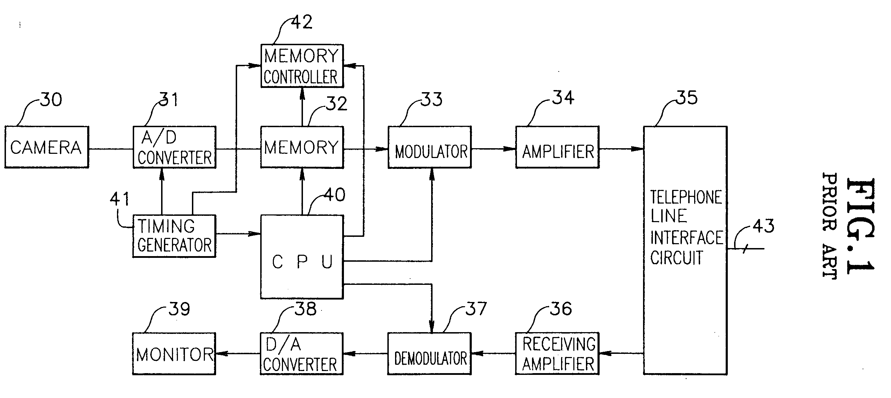

With reference to Fig. 1, there is shown a block diagram of a conventional apparatus for transmitting and receiving an image signal. The illustrated apparatus comprises an analog/digital (A/D) converter 31 for converting an image signal outputted from a camera 30 into a digital signal synchronously with a timing signal from a timing generator 41. The digital-converted signal is written into a memory 32 by a memory controller 42 under the control of a central processing unit 40. The signal written into the memory 32 is read under the control of the central processing unit 40 for modulation at a modulator 33. This modulated signal is amplified by an amplifier 34 and then the amplified signal is sent out to a telephone line 43 through a telephone line interface circuit 35. On the other hand, a signal from the telephone line 43 is received to a receiving amplifier 36 through the telephone line interface circuit 35. The receiving amplifier 36 amplifies the received signal and outputs the amplified signal to a demodulator 37. The demodulator 37 demodulates the amplified signal from the amplifier 36 into an original signal. This demodulated signal is converted into an analog signal by a digital-/analog (D/A) converter 38 and the analog-converted signal is then displayed on a monitor 39.

For the modulation in the above-apparatus, there is used an amplitude modulation, a phase modulation, or an amplitude-phase modulation mixing the amplitude and phase modulations.

However, in the conventional apparatus as mentioned above, it takes much transmission time to transmit and receive information through a transmission line because of shortage of capacity of the transmission line in comparison with much information of the image signal.

## SUMMARY OF THE INVENTION

Therefore, it is an object of the present invention to provide an apparatus for transmitting and receiving an image signal in use of a general telephone line, which is capable of transmitting and receiving much information of image data at high speed.

In accordance with the present invention, the object can be accomplished by a provision of an apparatus for transmitting and receiving an image signal in use of a telephone line, comprising: image signal processing means including a central processing unit for controlling the whole operation of the apparatus, an A/D converter for converting an image signal outputted from a camera into a digital signal, and a memory for storing the digital signal from said a/D converter and reading out the stored digital data under a control of said central processing unit; image signal transmitting means for converting the digital data outputted from said image signal processing means into a sinusoidal wave signal of a predetermined frequency corresponding to the digital data and transmitting the sinusoidal wave signal of the predetermined frequency to a telephone line interface circuit; and image signal receiving means for counting a frequency of a sinusoidal wave signal received through said telephone line interface circuit, converting the counted value into an origianl image signal and displaying the image signal on a monitor.

## BRIEF DESCRIPTION OF THE DRAWINGS

The above and other objects, features and advantages of the present invention will be more clearly understood from the following detailed description taken in conjunction with the accompanying drawings, in which:

Fig. 1 is a block diagram of a conventional apparatus for transmitting and receiving an image signal;

Fig. 2 is a block diagram of an apparatus for transmitting and receiving the image signal in accordance with the present invention;

Fig. 3 is a detailed block diagram of a data/frequency converter in Fig. 2;

Fig. 4 illustrates frequencies corresponding to various digital data of the image signal according to the present invention;

Fig. 5 is a waveform diagram relating to the number of bits corresponding to a frequency band according to the present invention; and

Figs. 6A through 6D are waveform diagrams relating to a process of received data according to the present invention.

## DETAILED DESCRIPTION OF REFERRED EMBODIMENTS

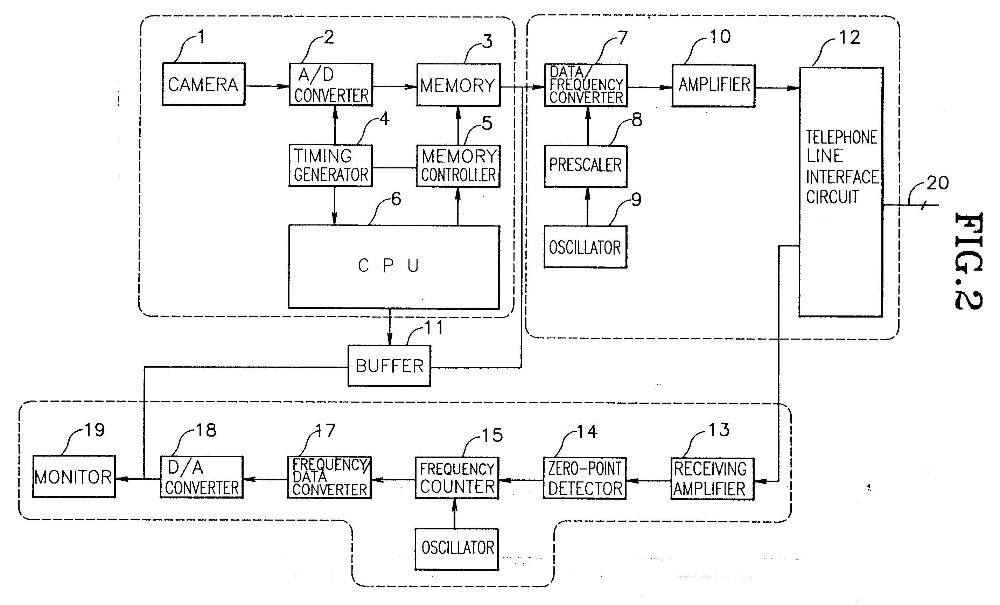

With reference to Fig. 2, there is shown a block diagram of an apparatus for transmitting and receiving an image signal in accordance with the present invention. As shown in this drawing, the apparatus of the present invention comprises a timing generator 4 for generating a timing signal, an A/D converter 2 for converting an image signal outputted from a camera 1 into a digital signal synchronously with the timing signal from the timing generator 4, a central processing unit 6 for controlling the whole operation of the apparatus in response to the timing signal from the timing generator 4, a memory controller 5 for operating in response to the timing signal from the timing generator 4 and under a control of the central processing unit 6, a memory 3 for storing an output signal from the A/D converter 2 under a control of the memory controller 5 and reading out the stored data under a control of the central processing unit 6, an oscillator 9 for generating a predetermined frequency of oscillation signal, a prescaler 8 for frequency-dividing the oscillation signal from the oscillator 9, a. data/frequency converter 7 for converting output data from the memory 3 into a predetermined frequency of signal in response to the frquency-divided signal from the prescaler 8, and an amplifier 10 for amplifying an output signal from the data/frequency converter 7 and sending the amplified signal to a telephone line interface circuit 20.

Also, the apparatus of the present invention comprises a receiving amplifier 13 for amplifying a signal received through the telephone line interface circuit 20, a zero-point detector 14 for detecting a zero-point of an output signal from the receiving amplifier 13 to output a square wave signal, an oscillator 16 for generating a predetermined frequency of oscillation signal, a frequency counter 15 for counting a frequency of an output signal from the zero-point detector 14 in response to the oscillation signal from the oscillator 16, a frequency/data converter 17 for converting an output signal from the frequency counter 15 into original digital data, a D/A converter 18 for converting an output signal from the frequency/data converter 17 into an analog signal and displaying the analog signal on a monitor 19, and a buffer for applying the output data from the memory 3 to the monitor 19 under a control of the central processing unit 6. In the drawing, the reference numeral 20 not described designates a telephone line.

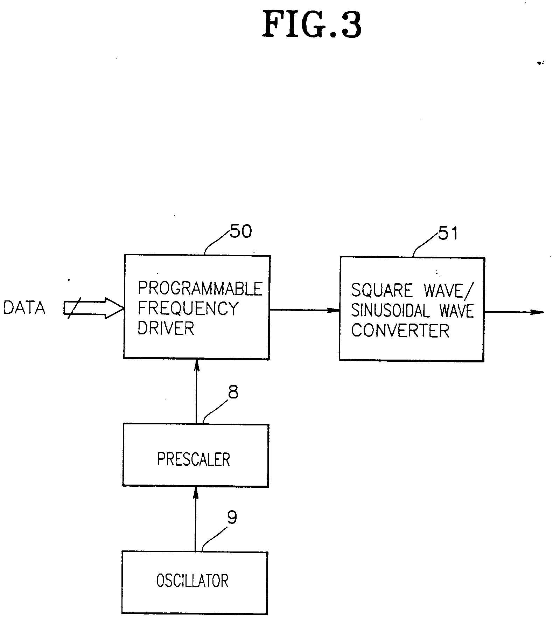

With reference to Fig. 3, there is shown a detailed block diagram of a data/frequency converter 7 in Fig. 2. As shown in this drawing, the data/frequency converter 7 is provided with a programmable frequency-divider 50 for converting the output data from the memory 3 into the predetermined frequency of square wave signal in response to the frequency-divided signal from the prescaler 8 and a square wave/sinusoidal wave converter 51 for converting an output signal from the programmable frequency-divider 50 into a sinusoidal wave signal.

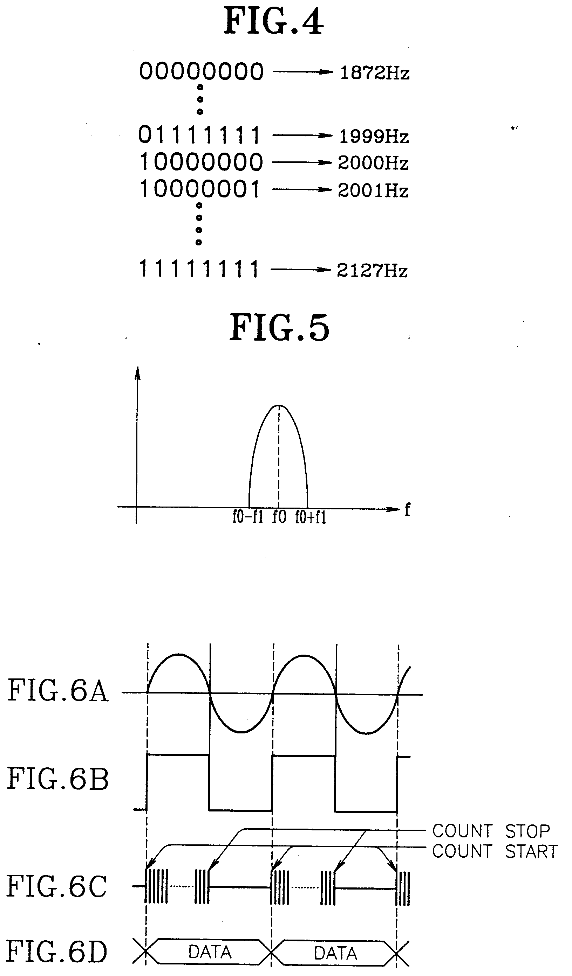

Now, the operation of the apparatus with the above-mentioned construction in accordance with the present invention will be described in detail with reference to Figs. 4, 5 and 6A through 6D.

The image signal outputted from the camera 1 is converted into a digital signal by the A/D converter 2 synchronously with the timing signal from the timing generator 4, which is then stored into the memory 3 by the memory controller 5 under the control of the central processing unit 6. Such digital data of the image signal stored in the memory 3 is read out from the memory 3 under the control of the central processing unit 6 and then the frequency corresponding to the read out data of the image signal is generated by the data/frequency converter 7. Namely, at this time, the oscillation signal outputted from the oscillator 9 is previously frequency-divided by the prescaler 8 and then the frequency-divided signal is applied to the data/frequency converter 7 for the generation of the frequency corresponding to the read out data of the image signal.

Turning again to Fig. 3 for a more detailed discussion of the above operation, the high frequency signal generated from the oscillator 9 is previously frequency-divided by the prescaler 8 and the frequency-divieded signal is applied to the programmable frequency-divider 50, which then outputs the square wave signal of the frequency corresponding to the data of the image signal. The square wave/sinusoidal wave converter 51 converts the square wave signal into the sinusoidal wave signal and outputs the sinusoidal signal.

The sinusoidal wave signal of the predetermined frequency outputted from the data/frequency converter 7 is amplified by the amplifier 10 and then the amplified signal is sent out to the telephone line 20 through the telephone line interface circuit 12.

On the other hand, a sinusoidal wave signal from the counterpart is received to the telephone line interface circuit 12 through the telephone line 20. The received sinusoidal wave signal is amplified by the receiving amplifier 13 and then a zero-point of the amplified signal is detected by the zero-point detector 14, which then outputs the square wave signal. The frequency counter 15 counts the frequency of the square wave signal outputted from the zero-point detector 14 in response to the oscillation signal from the oscillator 16 and the frequency/data converter 17 converts the output signal from the frequency counter 15 into original digital data. This digital data outputted from the frequency/data converter 17 is converted into an origianl image signal by the D/A converter 18 for the display on the monitor 19.

With reference to Fig. 4, there are illustrated frequencies corresponding to various digital data of the image signal according to the present invention. The conversion of digital data into frequency will be described with reference to Fig. 4. When the digital data is of 8 bits, the number of events which can represent the 8 bit data is 256. Supposing that a center carrier frequency is 2000Hz, the frequency band necessary to transmit the 8 bit data is 2000Hz±128Hz and the transmission speed is 16000 bps on the average. As a result, the frequency into which the 8 bit data is converted is 1872Hz and the data "11111111" is converted into 2127Hz.

With reference to Fig. 5, there is illustrated a waveform diagram relating to the number of bits corresponding to a frequency band according to the present invention. The frequency f1 is determined as a function of $2^{N-1}$Hz, wherein N is the number of bits. As a result, if 10 bit data is to be converted into a frequency, the frequency f1 should be 512Hz, i.e., $2^{10-1}=512$Hz.

That is, the frequency band is f0±512Hz and the average transmission speed is f0 x Nbps. As a result, the transmission center carrier frequency is 2 KHz and, in the case where the 10 bit data is transmitted, the transmission speed is 20 Kbps.

With reference to Figs. 6A through 6D, there are shown waveform diagrams relating to a process of received data according to the present invention. If the sinusoidal wave signal is received as shown in Fig. 6A, a zero-point of the sinusoidal wave signal is detected by the zero-point detector 14, which then outputs the square wave signal as shown in Fig. 6B. At this time, the frequency counter 15 begins to count the oscillation signal from the oscillator 16 at the rising edge of the square wave signal from the zero-point detector 14 and then stops the counting at the trailing edge of the square wave signal, as shown in Fig. 6C, so as to count the frequency of the sinusoidal wave signal. Herein, the receiving frequency is determined as a function of $f_R=1/(TxNx2)$, wherein T is a clock period of the frequency counter 15 and N is a counted value. As mentioned above, the frequency of the sinusoidal wave signal is discriminated according to the counted value from the frequency counter 15 and the data corresponding to the frequency can be obtained as shown in Fig. 6D.

As hereinbefore described, in accordance with the present invention, the transmission speed is determined according to the number of bits of the transmission data and the transmission center carrier frequency, thereby allowing much information to be transmitted and received at a narrow band. Therefore, the transmission time can be shortened such that the rapid display on the screen is enabled.

Although the preferred embodiments of the present invention have been disclosed for illustrative purpose, those skilled in the art will appreciate that various modifications, additions and substitutions are possible, without departing from the scope and spirit of the invention as disclosed in the accompanying claims.

**Claims**

1. An apparatus for transmitting and receiving an image signal in use of a telephone line, comprising :

image signal processing means including a central processing unit (6) for controlling the whole operation of the apparatus, an A/D converter (2) for converting an image signal outputted from a camera (1) into a digital signal, and a memory (3) for storing the digital signal from said A/D converter (2) and reading out the stored digital data under control of said central processing unit (6) ;

image signal transmitting means for converting the digital data outputted from said image signal processing means into a sinusoidal wave signal of a predetermined frequency corresponding to the digital data and transmitting the sinusoidal wave signal of the predetermined frequency to a telephone line interface circuit (20) ; and

image signal receiving means for counting a frequency of a sinusoidal wave signal received through said telephone line interface circuit, converting the counted value into an original image signal and displaying the image signal on a monitor (19).

2. An apparatus for transmitting and receiving an image signal in use of a telephone line, as set forth in Claim 1, wherein said image signal transmitting means includes ;

first oscillating means (9) for generating a predetermined frequency of oscillation signal ;

first frequency-dividing means (8) for frequency-dividing said oscillation signal from said first oscillating means ;

data/frequency converting means (7) for converting the digital data from said memory into the predetermined frequency of sinusoidal wave signal in response to the frequency-divided signal from said first frequency-dividing means ; and

amplifying means (10) for amplifying an output signal from said data/frequency converting means (7) and sending the amplified signal to said telephone line interface circuit (20).

3. An apparatus for transmitting and receiving an image signal in use of a telephone line, as set forth in Claim 2, wherein said data/frequency converting means (7) includes :

second programmable frequency-dividing means (50) for converting the digital data from said memory (3) into a predetermined frequency of square wave signal in response to the frequency-divided signal from said first frequency-dividing means ; and

square wave/sinusoidal wave converting means (51) for converting an output signal from said second programmable frequency-dividing means into the sinusoidal wave signal.

4. An apparatus for transmitting and receiving an image signal in use of a telephone line, as set forth in Claim 1, 2 or 3, wherein said image signal receiving means includes :

receiving amplifying means (13) for amplifying the sinusoidal wave signal received through said telephone line interface circuit (12) ;

zero-point detecting means (14) for detecting a zero-point of an output signal from said receiving amplifying means to output a square wave signal ;

second oscillating means (16) for generating a predetermined frequency of oscillation signal ;

frequency counting means for counting a frequency of an output signal from said zero-point detecting means in response to said oscillation signal from said second oscillating means ;

frequency/data converting means (17) for converting an output signal from said frequency counting means into original digital data ; and

D/A converting means (18) for converting an output signal from said frequency/data converting means into an analog signal and displaying the analog signal on said monitor (19).

# FIG.1
## PRIOR ART

# FIG.2

# FIG.3

DATA →
┌─────────────┐
│ /50 │
│ PROGRAMMABLE │
│ FREQUENCY │
│ DRIVER │
└─────────────┘

┌─────────────┐
│ /51 │
│ SQUARE WAVE/ │
│ SINUSOIDAL WAVE │
│ CONVERTER │
└─────────────┘ →

┌─────────────┐
│ 8 │
│ PRESCALER │
└─────────────┘

┌─────────────┐
│ 9 │
│ OSCILLATOR │
└─────────────┘

# FIG.4

00000000 —————→ 1872Hz
        ⋮
01111111 —————→ 1999Hz
10000000 —————→ 2000Hz
10000001 —————→ 2001Hz
        ⋮
11111111 —————→ 2127Hz

# FIG.5

FIG.6A

FIG.6B

COUNT STOP
COUNT START

FIG.6C

FIG.6D   DATA   DATA